# EUROPEAN PATENT APPLICATION

(11) **EP 4 621 456 A1**
(43) Date of publication of application: **24.09.2025**
(21) Application number: 23891539.1
(22) Date of filing: 13.11.2023
(51) Int. Cl.: G02B 6/25

(54) **OPTICAL FIBER CUTTER**

(30) Priority: 16.11.2022 JP 2022183481
(71) Applicant: Sumitomo Electric Optifrontier Co., Ltd., Yokohama-shi, Kanagawa 244-8589 (JP)
(72) Inventor: KURINO, Shinsuke, Yokohama-shi, Kanagawa 244-8589 (JP); TODA, Yoshinobu, Yokohama-shi, Kanagawa 244-8589 (JP); JOKO, Kazufumi, Yokohama-shi, Kanagawa 244-8589 (JP)
(74) Representative: Müller-Boré & Partner Patentanwälte PartG mbB
(86) International application number: PCT/JP2023/040800
(87) International publication number: WO 2024/106392

(57) **Abstract**

An optical fiber cutter (1) according to one embodiment of the present invention comprises: a roller (14); a first gear (13) that is attached to a rotation shaft (12) and that receives a driving force for rotating the rotation shaft (12); a second gear (30) that rotates while being meshed with the first gear (13); an interlocking member (11) that has a rack (11b) which interlocks with revolving of a cover (3) and which transmits the driving force for rotating the second gear (30) in accordance with the interlock; and a third gear (20) that rotates while being meshed with the rack (11b). The third gear (20) rotates in a first rotation direction (D1) when the interlocking member (11) moves to a first direction (A1), and rotates in a second rotation direction (D2) opposite to the first rotation direction (D1) when the interlocking member (11) moves in a second direction (A2) different from the first direction (A1). The second gear (30) does not rotate when the third gear (20) rotates in the first rotation direction (D1), but rotates in the second rotation direction (D2) together with the third gear (20) when the third gear (20) rotates in the second rotation direction (D2).

## Description

### TECHNICAL FIELD

The present disclosure relates to an optical fiber cutter. This application claims priority from Japanese Patent Application No. 2022-183481 filed on November 16, 2022, the entire contents of which are incorporated herein by reference.

### BACKGROUND ART

Patent literature 1 describes an optical fiber cutter. The optical fiber cutter has a main body, a clamp for holding the bare optical fiber, a disc-shaped blade portion for scratching the bare optical fiber, and a scrap collection mechanism for collecting scraps of the bare optical fiber. The scrap collection mechanism has a case body having an opening, an inner case accommodated in the case body, an opening-closing lid for opening and closing the opening of the case body, and an opening-closing lock lever that locks the opening-closing lid in an open state.

The scrap collection mechanism includes a lower roller axially supported inside the case body and an upper roller axially supported on a back surface of the opening-closing lid. The scraps of the bare optical fiber are interposed between the upper roller and the lower roller. The scrap collection mechanism further includes a driving lever accommodated in the case body, a driving gear mounted on the driving lever, and an idle gear interposed between the driving gear and the lower roller.

The driving lever includes a shaft, a flange provided at a left end of the shaft, and an arm portion protruding upward from the flange. The driving gear includes a substantially cylindrical base portion, a pair of claw portions, a gear mounting portion, a gear portion, a ridge portion, and a protrusion. The driving force of the driving gear is transmitted to the lower roller through the driving lever. In the initial state, the base portion of the driving gear is separated from the flange of the driving lever, and the gear portion of the driving gear is not meshed with the idle gear. Thus, a rotation of the driving gear is not transmitted to the lower roller, and the lower roller is not rotated.

Patent literature 2 describes a one way clutch. The one way clutch has an outer race as an outer ring member and an inner race as an inner ring member. An inner peripheral of the outer race is formed with a plurality of internal teeth. A plurality of flexible ratchet pawls is provided at an outer periphery of the inner race. The outer race and the inner race are fitted to each other in a state where the internal teeth of the outer race and the ratchet pawls of the inner race are engaged with each other.

Patent literature 3 describes a ratchet type one way clutch. The ratchet type one way clutch has an outer ring, an inner ring disposed radial direction inward of the outer ring, and a ratchet mechanism that transmits torque between the outer ring and the inner ring. The ratchet mechanism is formed by a notch formed in the inner ring, a first recessed portion formed in the outer ring, and a claw portion member held by the first recessed portion.

### CITATION LIST

### PATENT LITERATURE

Patent literature 1: WO 2022/181766
Patent literature 2: Japanese Unexamined Patent Application Publication No. 2013-194796
Patent literature 3: Japanese Unexamined Patent Application Publication No. 2019-127989

### SUMMARY OF INVENTION

An optical fiber cutter according to the present disclosure is an optical fiber cutter having a cover and configured to cut an optical fiber by pivoting of the cover. The optical fiber cutter includes a roller attached to a rotation shaft and configured to rotate about the rotation shaft while holding the optical fiber to be cut, a first gear attached to the rotation shaft and configured to receive a driving force for rotating the rotation shaft, a second gear configured to rotate by meshing with the first gear, an interlocking member configured to interlock with pivoting of the cover and having a rack configured to transmit a driving force for rotating the second gear in accordance with the interlock, and a third gear configured to rotate by meshing with the rack. The third gear rotates in a first rotation direction when the interlocking member moves in a first direction, and the third gear rotates in a second rotation direction opposite to the first rotation direction when the interlocking member moves in a second direction different from the first direction. The second gear does not rotate when the third gear rotates in the first rotation direction, and the second gear rotates together with the third gear in the second rotation direction when the third gear rotates in the second rotation direction.

### BRIEF DESCRIPTION OF THE DRAWINGS

FIG. 1 is a perspective view showing an optical fiber cutter according to an embodiment.
FIG. 2 is a cross-sectional perspective view showing a cover, an interlocking member, a third gear, and a second gear of the optical fiber cutter of FIG. 1.
FIG. 3 is a perspective view showing the interlocking member, the third gear, the second gear, a first gear, and a roller of the optical fiber cutter of FIG. 1.
FIG. 4 is a perspective view showing a second gear and a third gear of FIG. 3.
FIG. 5 is a perspective view showing the third gear of FIG. 3.
FIG. 6 is a front view showing the third gear of FIG. 3.
FIG. 7 is a front view showing the second gear of FIG. 3.

### DETAILED DESCRIPTION

In an optical fiber cutter, a blade configured to make a scratch on an optical fiber and the roller for moving the cut optical fiber to a collecting device are arranged side by side. The roller is attached to the rotation shaft and is configured to be rotatable about the rotation shaft. However, when the roller rotates so that an upper surface of the roller faces the blade, there is a possibility that a scrap of the optical fiber comes out toward the blade. Thus, it is required to restrict rotation of the roller in one direction.

In the optical fiber cutter described in Patent literature 1, in the initial state, the base portion of the driving gear is separated from the flange of the driving lever, and the gear portion of the driving gear is not meshed with the idle gear. Thus, the rotation of the driving gear is not transmitted to the lower roller, and the lower roller is not rotated. However, the optical fiber cutter has a large number of components and the shape of each component is complicated. Thus, it is required to simplify a configuration.

It is an object of the present disclosure to provide an optical fiber cutter having a simple configuration and having a roller whose rotation is restricted in one direction.

### [Description of Embodiments of the Present Invention]

Hereinafter, embodiments of an optical fiber cutter according to the present disclosure will be described. (1) An optical fiber cutter according to an embodiment is an optical fiber cutter having a cover and configured to cut an optical fiber by pivoting of the cover. The optical fiber cutter includes a roller attached to a rotation shaft and configured to rotate about the rotation shaft while holding the optical fiber to be cut, a first gear attached to the rotation shaft and configured to receive a driving force for rotating the rotation shaft, a second gear configured to rotate by meshing with the first gear, an interlocking member configured to interlock with pivoting of the cover and having a rack configured to transmit a driving force for rotating the second gear in accordance with the interlock, and a third gear configured to rotate by meshing with the rack. The third gear rotates in a first rotation direction when the interlocking member moves in a first direction, and the third gear rotates in a second rotation direction opposite to the first rotation direction when the interlocking member moves in a second direction different from the first direction. The second gear does not rotate when the third gear rotates in the first rotation direction, and the second gear rotates together with the third gear in the second rotation direction when the third gear rotates in the second rotation direction.

The optical fiber cutter has the roller configured to hold the optical fiber to be cut, and the roller rotates about the rotation shaft. The optical fiber cutter has the first gear attached to the rotation shaft, the second gear configured to rotate by meshing with the first gear, the third gear, and the interlocking member having the rack that rotates by meshing with the third gear. The third gear rotates in the first rotation direction when the interlocking member moves in the first direction, and rotates in the second rotation direction opposite to the first rotation direction when the interlocking member moves in the second direction. The second gear rotates together with the third gear in the second rotation direction when the third gear rotates in the second rotation direction. When the second gear rotates in the second rotation direction, the first gear and the roller rotate in the first rotation direction. On the other hand, the second gear does not rotate when the third gear rotates in the first rotation direction. Thus, the first gear and the roller do not rotate in the second rotation direction. Thus, since the rotation of the roller in one direction can be restricted, the possibility that the scrap of the optical fiber comes out toward the blade can be reduced. Further, since a mechanism for rotating the roller is formed by the first gear, the second gear, the third gear and the interlocking member, the structure can be simplified.

(2) In the above (1), the second gear may have a recessed portion into which a portion of the third gear enters. The recessed portion may be defined by a bottom surface that the third gear faces and an inner peripheral surface. The second gear may have a protruding portion protruding from the inner peripheral surface. The third gear may have a claw portion configured to come into contact with the protruding portion in a state in which the claw portion is placed in the recessed portion of the second gear. The claw portion may have an abutting surface extending along a radial direction of the third gear, a top portion located at an end of the abutting surface in the radial direction, and an inclined surface extending from the top portion obliquely to the abutting surface to form an acute angle between the abutting surface and the inclined surface. When the third gear rotates in the first rotation direction, the inclined surface passes over the protruding portion, and the second gear does not rotate, and, when the third gear rotates in the second rotation direction, the abutting surface may abut the protruding portion, and the second gear may rotate together with the third gear in the second rotation direction. The claw portion may have a narrowed portion extending from an end portion of the abutting surface opposite to the top portion, the narrowed portion becoming closer to the inclined surface as the narrowed portion becomes further away from the end portion. In this case, when the third gear rotates in the first rotation direction, the inclined surface passes over the protruding portion, and the second gear does not rotate. On the other hand, when the third gear rotates in the second rotation direction, the abutting surface abuts the protruding portion, and the second gear rotates together with the third gear in the second rotation direction. The claw portion of the third gear having the inclined surface and the abutting surface has the narrowed portion. The narrowed portion extends from an end portion of the abutting surface opposite to the top portion, and the narrowed portion becomes closer to the inclined surface as the narrowed portion becomes further away from the end portion. By the claw portion having the narrowed portion, the thickness of the claw portion becomes thinner as it becomes further away from the top portion. Thus, the claw portion can be easily deformed when the third gear rotates in the first rotation direction, and thus the third gear can smoothly rotate in the first rotation direction.

(3) In the above (2), the third gear may have a tooth portion configured to rotate by meshing with the rack of the interlocking member. The tooth portion may be integrated with the claw portion. In this case, a configuration of the third gear can be simplified.

(4) In the above (3), the third gear may have a base on which the tooth portion is formed. The base may be provided with a hole extending through the base in an axial direction of the third gear. In this case, the third gear can be easily manufactured by molding.

(5) In any one of the above (1) to (4), the optical fiber cutter may include a fiber holding portion configured to hold the optical fiber, and the fiber holding portion may be configured to be movable upward and downward with respect to the roller.

(6) In any one of the above (1) to (5), the first direction may be a direction in which the interlocking member moves when the cover is closed, and the second direction may be a direction in which the interlocking member moves when the cover is opened.

(7) In any one of the above (1) to (6), the first direction may be a direction from an upper location toward a lower location, and the second direction may be a direction from a lower location toward an upper location.

(8) In any one of the above (1) to (7), the first rotation direction may be a direction in which a surface of the roller facing upward moves away from a blade of the optical fiber cutter, and the second rotation direction may be a direction in which a surface of the roller facing upward moves toward the blade.

(9) In the above (4), the base may have a contact portion configured to come into contact with the second gear.

(10) In the above (9), the contact portion may have a flange shape with an enlarged diameter on a side of the base opposite to the tooth portion.

(11) In any one of the above (4), (9), and (10), the claw portion and the hole may be arranged side by side in an axial direction of the third gear.

(12) In any one of the above (4) and (9) to (11), the claw portion may be formed on a surface of the base opposite to the tooth portion.

(13) In any one of the above (2) to (4) and (9) to (12), the third gear may include a claw unit including a plurality of the claw portions.

(14) In the above (13), the claw unit may have an arm portion extending from a location adjacent to a shaft of the third gear toward an outer periphery of the third gear, and the claw portion located at an end portion of the arm portion opposite to the shaft.

(15) In the above (14), the claw unit may be constituted by a pair of the arm portions and a pair of the claw portions.

(16) In any one of the above (2) to (4) and (9) to (15), the claw portion may have an abutting surface extending along a radial direction of the third gear, a top portion located at an end of the abutting surface in the radial direction, and an inclined surface extending from the top portion obliquely to the abutting surface to form an acute angle between the abutting surface and the inclined surface.

(17) In any one of the above (1) to (16), the second gear may have a recessed portion into which a portion of the third gear enters, and the recessed portion may be defined by a bottom surface that the third gear faces and an inner peripheral surface.

(18) In any one of the above (2) to (4) and (9) to (16), the second gear may have a protruding portion protruding from an inner peripheral surface of the second gear, and the claw portion of the third gear may come into contact with the protruding portion.

(19) In the above (18), the protruding portion may have a first protruding surface protruding along a radial direction of the second gear from the inner peripheral surface, and a second protruding surface extending from a protruding end of the first protruding surface to form a right angle between the first protruding surface and the second protruding surface when viewed along an axial direction of the second gear.

(20) In any one of the above (1) to (19), the third gear may be integrally molded. In this case, the configuration of the third gear can be simplified, and the third gear can be easily manufactured.

### [Details of Embodiments of Present Disclosure]

Specific examples of an optical fiber cutter according to an embodiment will be described below with reference to the drawings. The present invention is not limited to the following examples, but is intended to include all modifications within the scope of the claims and equivalents thereof. In the description of the drawings, the same or corresponding elements are denoted by the same reference numerals, and redundant description will be appropriately omitted. In the drawings, some components may be simplified or exaggerated for easy understanding, and the dimensional ratios and the like are not limited to those shown in the drawings.

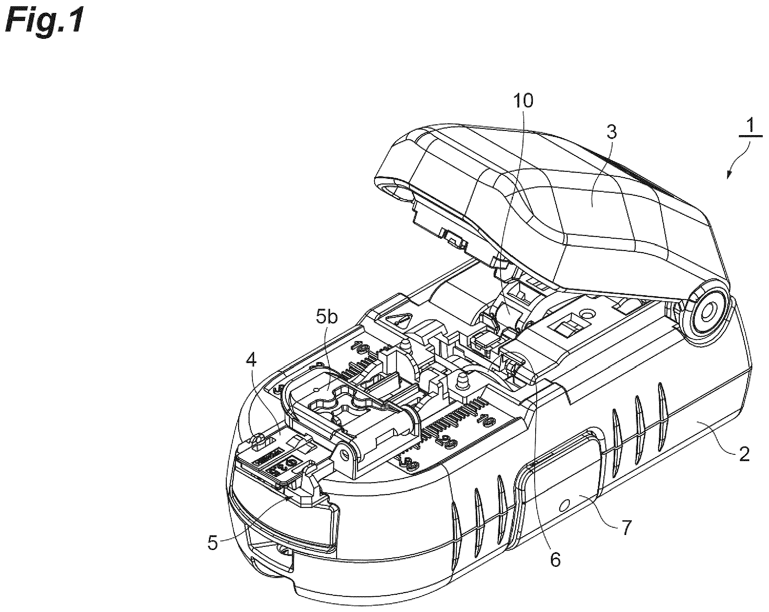

FIG. 1 is a perspective view showing an optical fiber cutter 1 according to an embodiment. Optical fiber cutter 1 is a device that cuts a glass fiber exposed by removing a coating of a tip end portion of the optical fiber, for example. For example, optical fiber cutter 1 has a substrate 2, a cover 3, a guide member 4, a base member 5, a blade 6 to make a scratch on the optical fiber, a moving member 7, and a fiber holding portion 10. Cover 3 is configured to be openable and closable by pivoting with respect to substrate 2. Optical fiber cutter 1 cuts the optical fiber by pivoting of cover 3. Cover 3 is connected to be rotatable, for example, via the shaft extending along a width direction of substrate 2 at an end portion of substrate 2.

Guide member 4 and base member 5 constitute an optical fiber holder for holding an optical fiber to be scratched and cut by blade 6. Base member 5 has a cover 5b that covers the optical fiber guided by guide member 4. Blade 6 is provided to make a scratch on the optical fiber. For example, blade 6 has a disk shape. Moving member 7 is provided on a side surface of substrate 2 facing the width direction of substrate 2. Moving member 7 is movable in the width direction of substrate 2. Blade 6 moves by moving member 7 moving. Fiber holding portion 10 holds an end portion of the optical fiber guided by guide member 4. The optical fiber held by fiber holding portion 10 is scratched and cut by blade 6 which moves by moving member 7 moving.

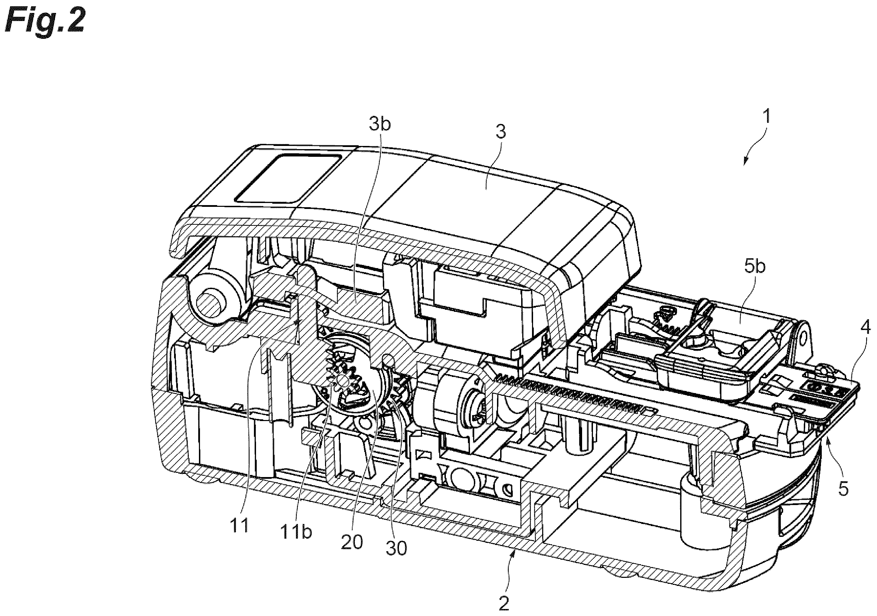

FIG. 2 is a cross-sectional perspective view of optical fiber cutter 1. As shown in FIG. 2, optical fiber cutter 1 has an inside member 3b that locates inside cover 3. For example, inside member 3b moves upward and downward with cover 3. Further, optical fiber cutter 1 has an interlocking member 11 which interlocks with pivoting of cover 3. For example, interlocking member 11 interlocks with inside member 3b. Interlocking member 11 has, for example, a rod-shaped portion extending upward, and is fixed to inside member 3b via the rod-shaped portion. Thus, interlocking member 11 moves upward together with inside member 3b when cover 3 is opened, and moves downward together with inside member 3b when cover 3 is closed.

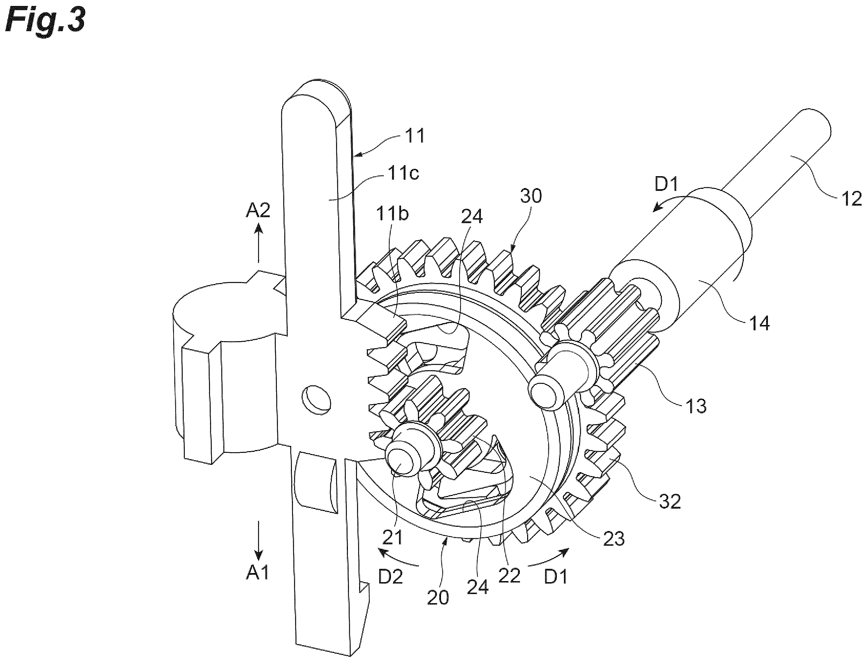

FIG. 3 is a perspective view showing a structure around interlocking member 11. As shown in FIG. 1, FIG. 2, and FIG. 3, optical fiber cutter 1 has a roller 14 with which fiber holding portion 10 comes into contact, a rotation shaft 12 to which roller 14 is attached, and a first gear 13 for rotating rotation shaft 12. For example, fiber holding portion 10 is movable upward and downward with respect to roller 14, and comes into contact with roller 14 when moved downward. The optical fiber to be cut is sandwiched between fiber holding portion 10 and roller 14.

Rotation shaft 12 extends along the width direction of substrate 2, for example. First gear 13 is attached to rotation shaft 12 at a location adjacent to roller 14, for example. First gear 13 and roller 14 are arranged side by side in the width direction of substrate 2. Roller 14 rotates about rotation shaft 12 while holding the optical fiber to be cut. Interlocking member 11 supplies a driving force to first gear 13 via a third gear 20 and a second gear 30, which will be described later. First gear 13 is attached to rotation shaft 12 and configured to receive a driving force for rotating rotation shaft 12.

Interlocking member 11 has a rack 11b for transmitting a driving force for rotating third gear 20. Interlocking member 11 rotates third gear 20 in accordance with the interlock described above. When interlocking member 11 moves in a first direction A1 (direction indicated by an arrow in FIG. 1), interlocking member 11 rotates third gear 20 in a first rotation direction D1 (the direction indicated by the arrow in FIG. 1). When interlocking member 11 moves in a second direction A2 different from first direction A1, interlocking member 11 rotates third gear 20 in a second rotation direction D2 opposite to first rotation direction D1. First direction A1 is, for example, a direction in which interlocking member 11 moves when cover 3 is closed. As an example, first direction A1 is a direction from an upper location toward a lower location. Second direction A2 is, for example, a direction in which interlocking member 11 moves when cover 3 is opened. As an example, second direction A2 is a direction from a lower location toward an upper location.

In the present embodiment, first rotation direction D1 is a direction in which a surface of roller 14 facing upward moves away from blade 6, and second rotation direction D2 is a direction in which the surface of roller 14 facing upward moves toward blade 6. When roller 14 rotates in second rotation direction D2, there is a possibility that scrap of the optical fiber may come out toward blade 6. When the scrap of the optical fiber comes out toward blade 6, the frequency of cleaning blade 6 or the like is expected to increase. When the frequency of cleaning of blade 6 or the like increases, safety is a concern. Thus, it is required to restrict the rotation of roller 14 in second rotation direction D2.

In optical fiber cutter 1 according to the present embodiment, roller 14 rotates in first rotation direction D1, and the rotation of roller 14 in second rotation direction D2 is restricted by providing third gear 20 described later. A configuration for realizing this function will be described below. First, when interlocking member 11 moves in second direction A2, third gear 20 and second gear 30 rotate in second rotation direction D2, first gear 13 rotates in first rotation direction D1, and thus rotation shaft 12 and roller 14 rotate in first rotation direction D1. On the other hand, when interlocking member 11 moves in first direction A1, third gear 20 rotates in first rotation direction D1, but second gear 30 does not rotate in first rotation direction D1. As a result, first gear 13, rotation shaft 12, and roller 14 do not rotate.

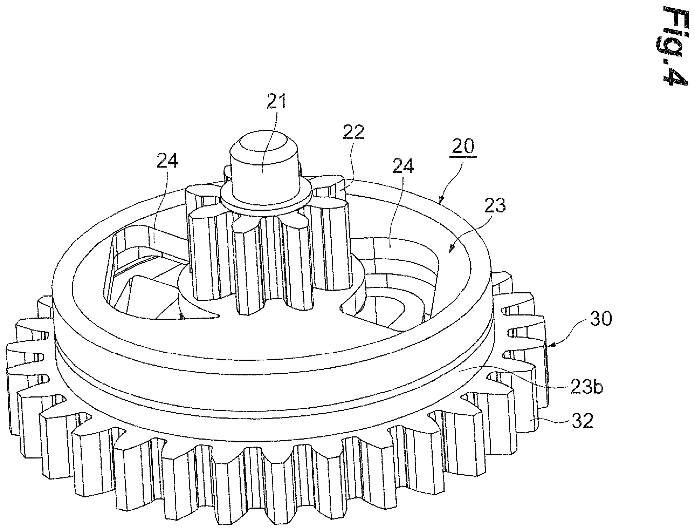

Third gear 20 meshes with rack 11b of interlocking member 11. FIG. 4 is a perspective view showing third gear 20 in an enlarged manner. As shown in FIG. 3 and FIG. 4, third gear 20 has a shaft 21, tooth portions 22 formed to extend radially from shaft 21 when viewed along a direction in which shaft 21 extends (a direction extending vertically in FIG. 4, which may be hereinafter referred to as an axial direction), and a base 23 on which tooth portion 22 is formed.

Shaft 21 protrudes from tooth portion 22 away from base 23. For example, shaft 21 has a columnar shape. Tooth portion 22 meshes with rack 11b of interlocking member 11. Thus, third gear 20 converts a linear movement of interlocking member 11 into a rotational movement of third gear 20. Base 23 has, for example, a disk shape. Base 23 has a contact portion 23b that comes into contact with second gear 30. Contact portion 23b has a flange shape with an enlarged diameter on a side of base 23 opposite to tooth portion 22. The flange shaped contact portion 23b comes into contact with second gear 30, thereby further stabilizing the rotation of second gear 30.

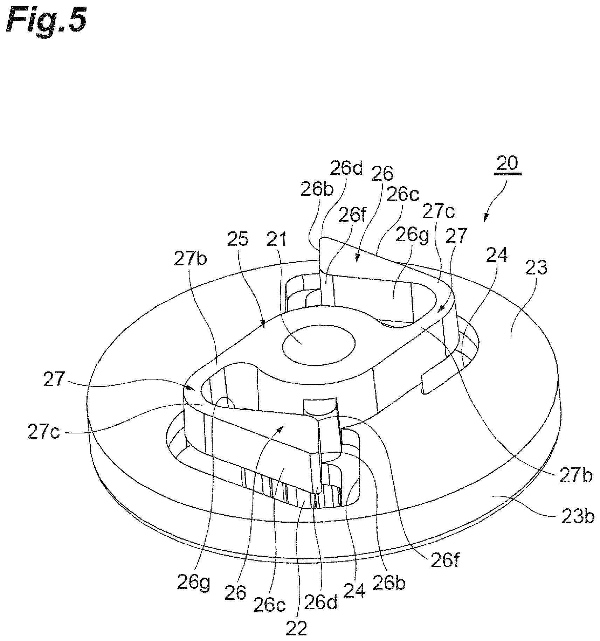

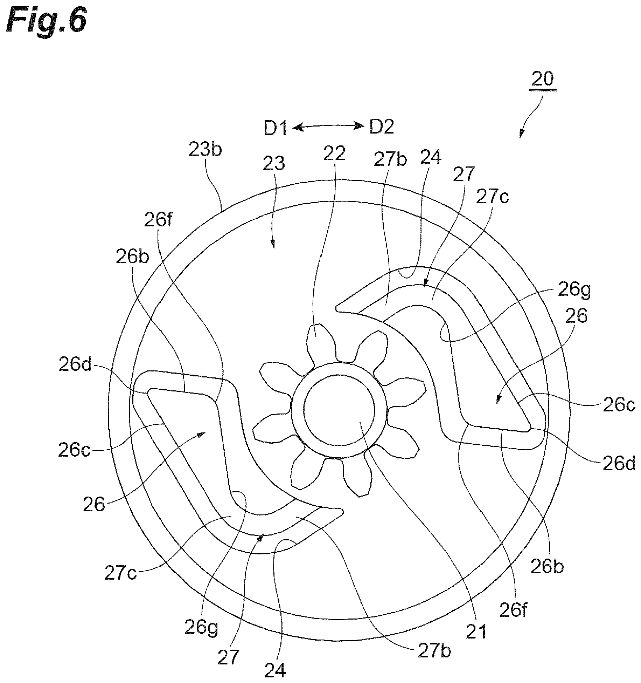

FIG. 5 is a perspective view showing a surface of base 23 opposite to tooth portion 22. FIG. 6 is a view showing a surface of base 23 on which tooth portion 22 is formed. As shown in FIG. 5 and FIG. 6, base 23 is provided with a hole 24 extending through base 23 in an axial direction of third gear 20. Third gear 20 has a claw portion 26 arranged side by side with hole 24 in the axial direction of third gear 20. Claw portion 26 corresponds to a portion that abuts second gear 30 described later.

For example, third gear 20 is made of resin. In this case, third gear 20 is integrally molded. In third gear 20, tooth portion 22 is integrated with claw portion 26. For example, claw portion 26 is formed on a surface of base 23 opposite to tooth portion 22. Third gear 20 has, for example, a plurality of (for example, two) claw portions 26. In the present embodiment, third gear 20 includes a claw unit 25 including the plurality of claw portions 26.

Claw unit 25 is formed on the surface of base 23 opposite to tooth portion 22. Claw unit 25 has an arm portion 27 extending from a location adjacent to shaft 21 toward an outer periphery of third gear 20, and claw portion 26 located at an end portion of arm portion 27 opposite to shaft 21. For example, claw unit 25 is constituted by a pair of arm portion 27 and a pair of claw portion 26. Claw portion 26 and at least a portion of arm portion 27 face hole 24 along the axial direction of third gear 20. Claw portion 26 and at least a portion of arm portion 27 are configured to be elastically deformable along the rotation direction (circumferential direction) of third gear 20.

For example, arm portion 27 has an extension portion 27b extending from the location adjacent to shaft 21 toward the outer periphery of third gear 20, and a bent portion 27c bent from an end portion of extension portion 27b on the side opposite to shaft 21. Bent portion 27c is bent, for example, at 90 degrees with respect to extension portion 27b. For example, a thickness of arm portion 27 is constant when viewed along the axial direction of third gear 20.

Claw portion 26 has an abutting surface 26b extending along a radial direction of third gear 20, a top portion 26d located at an end of abutting surface 26b in the radial direction, and an inclined surface 26c extending from top portion 26d obliquely to abutting surface 26b to form an acute angle between abutting surface 26b and inclined surface 26c. Further, claw portion 26 has a narrowed portion 26g extending from an end portion 26f of abutting surface 26b opposite to top portion 26d, and narrowed portion 26g becomes closer to inclined surface 26c as narrowed portion 26g becomes further away from end portion 26f.

Abutting surface 26b extends in both the radial direction of third gear 20 and the axial direction of third gear 20. Inclined surface 26c extends from top portion 26d toward arm portion 27 and extends in the axial direction of third gear 20. Abutting surface 26b and inclined surface 26c are flat. When viewed along the axial direction of third gear 20, top portion 26d and end portion 26f are rounded. For example, a thickness of claw portion 26 as viewed along the axial direction of third gear 20 is reduced as it is separated from top portion 26d. Thus, claw portion 26 is designed to have a shape that is easily elastically deformed.

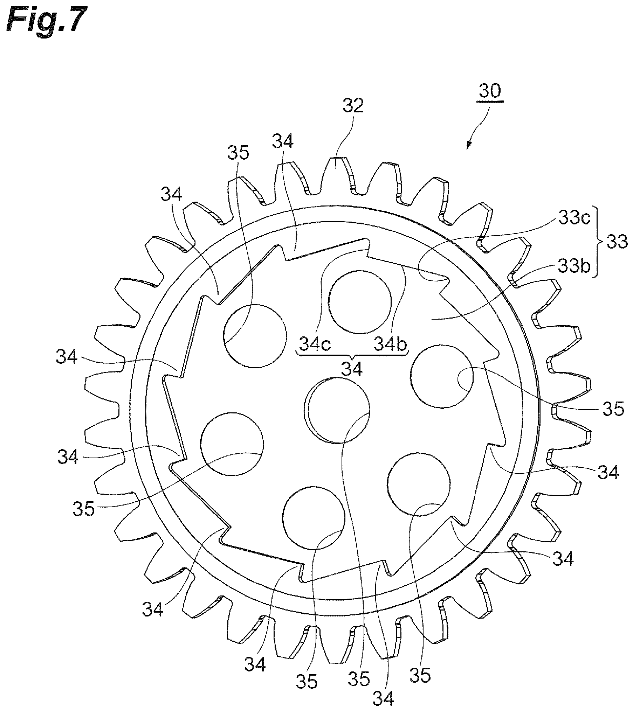

FIG. 7 is a view showing second gear 30. As shown in FIG. 6 and FIG. 7, second gear 30 has a protruding portion 34 protruding from an inner peripheral surface 33c of second gear 30, and claw portion 26 of third gear 20 comes into contact with protruding portion 34. For example, second gear 30 has a recessed portion 33 into which a portion of third gear 20 enters. Recessed portion 33 is defined by a bottom surface 33b that third gear 20 faces and inner peripheral surface 33c.

Bottom surface 33b extends in a direction orthogonal to the axial direction, for example. Inner peripheral surface 33c extends from an outer edge of bottom surface 33b along the axial direction of second gear 30. For example, a through hole 35 extending through second gear 30 in the axial direction of second gear 30 is formed in bottom surface 33b. For example, through hole 35 has a circular shape. Second gear 30 is provided with a plurality of (for example, seven) through holes 35. For example, one of the plurality of through holes 35 is formed at the center of second gear 30.

Second gear 30 meshes with first gear 13 described above. Second gear 30 has a tooth portion 32 at an outer periphery of second gear 30, which meshes with first gear 13. Claw portion 26 of third gear 20 that comes into contact with protruding portion 34 in a state in which claw portion 26 is placed in recessed portion 33 of second gear 30. For example, second gear 30 has a plurality of protruding portions 34. The plurality of protruding portions 34 are arranged along the rotation direction (circumferential direction) of second gear 30.

Protruding portion 34 has a first protruding surface 34c protruding along a radial direction of second gear 30 from inner peripheral surface 33c, and a second protruding surface 34b extending from a protruding end of first protruding surface 34c to form a right angle between first protruding surface 34c and second protruding surface 34b when viewed along the axial direction of second gear 30. Inclined surface 26c of claw portion 26 abuts second protruding surface 34b when third gear 20 rotates in first rotation direction D1. At this time, claw portion 26 is elastically deformed, and inclined surface 26c passes over second protruding surface 34b, and third gear 20 rotates in first rotation direction D1, and thus second gear 30 does not rotate. On the other hand, abutting surface 26b of claw portion 26 abuts first protruding surface 34c when third gear 20 rotates in second rotation direction D2. At this time, second gear 30 rotates together with third gear 20 in second rotation direction D2 in a state where abutting surface 26b abuts first protruding surface 34c.

As described above, as shown in FIG. 3, FIG. 6, and FIG. 7, third gear 20 rotates in first rotation direction D1 when interlocking member 11 moves in first direction A1, and rotates in second rotation direction D2 when interlocking member 11 moves in second direction A2. Second gear 30 does not rotate when third gear 20 rotates in first rotation direction D1, and rotates together with third gear 20 in second rotation direction D2 when third gear 20 rotates in second rotation direction D2.

Next, effects obtained from optical fiber cutter 1 according to the present embodiment will be described. Optical fiber cutter 1 has roller 14 that holds the optical fiber to be cut, and roller 14 rotates about rotation shaft 12. Optical fiber cutter 1 has first gear 13 attached to rotation shaft 12, second gear 30 meshing with first gear 13, third gear 20, and interlocking member 11 having rack 11b meshing with third gear 20. Third gear 20 rotates in first rotation direction D1 when interlocking member 11 moves in first direction A1, and rotates in second rotation direction D2 opposite to first rotation direction D1 when interlocking member 11 moves in second direction A2.

Second gear 30 rotates together with third gear 20 in second rotation direction D2 when third gear 20 rotates in second rotation direction D2. When second gear 30 rotates in second rotation direction D2, first gear 13 and roller 14 rotate in first rotation direction D1. On the other hand, second gear 30 does not rotate when third gear 20 rotates in first rotation direction D1. Thus, first gear 13 and roller 14 do not rotate in second rotation direction D2. Thus, since the rotation of roller 14 in one direction can be restricted, the possibility that scrap of the optical fiber comes out toward blade 6 can be reduced. Further, since a mechanism for rotating roller 14 is constituted by first gear 13, second gear 30, third gear 20 and interlocking member 11, the structure can be simplified.

As described above, second gear 30 may have recessed portion 33 into which a portion of third gear 20 enters. Recessed portion 33 may be defined by bottom surface 33b that third gear 20 faces and inner peripheral surface 33c. Second gear 30 may have protruding portion 34 protruding from inner peripheral surface 33c. Third gear 20 may have claw portion 26 configured to come into contact with protruding portion 34 in a state in which claw portion 26 is placed in recessed portion 33 of second gear 30. Claw portion 26 may have abutting surface 26b extending along the radial direction of third gear 20, top portion 26d located at an end of abutting surface 26b in the radial direction, and inclined surface 26c extending from top portion 26d obliquely to abutting surface 26b to form an acute angle between abutting surface 26b and inclined surface 26c. When third gear 20 rotates in first rotation direction D1, inclined surface 26c passes over protruding portion 34, and second gear 30 does not rotate, and, when third gear 20 rotates in second rotation direction D2, abutting surface 26b may abut protruding portion 34, and second gear 30 may rotate together with third gear 20 in second rotation direction D2. Claw portion 26 may have narrowed portion 26g extending from end portion 26f of abutting surface 26b opposite to top portion 26d, and the narrowed portion 26g becomes closer to inclined surface 26c as the narrowed portion 26g becomes further away from end portion 26f.

In this case, when third gear 20 rotates in first rotation direction D1, inclined surface 26c passes over protruding portion 34, and second gear 30 does not rotate. On the other hand, when third gear 20 rotates in second rotation direction D2, abutting surface 26b abuts protruding portion 34, and second gear 30 rotates together with third gear 20 in second rotation direction D2. Claw portion 26 of third gear 20 having inclined surface 26c and abutting surface 26b has narrowed portion 26g. Narrowed portion 26g extends from end portion 26f of abutting surface 26b opposite to top portion 26d, and the narrowed portion 26g becomes closer to inclined surface 26c as the narrowed portion 26g becomes further away from end portion 26f. By claw portion 26 having narrowed portion 26g, the thickness of claw portion 26 becomes thinner as it becomes further away from top portion 26d. Thus, claw portion 26 can be easily deformed when third gear 20 rotates in first rotation direction D1, and thus third gear 20 can smoothly rotate in first rotation direction D1.

As described above, third gear 20 has tooth portion 22 that meshes with rack 11b of interlocking member 11, and tooth portion 22 may be integrated with claw portion 26. In this case, the configuration of third gear 20 can be simplified.

As described above, third gear 20 may have base 23 on which tooth portion 22 is formed. Base 23 may be provided with hole 24 extending through base 23 in the axial direction of third gear 20. In this case, third gear 20 can be easily manufactured by molding.

As described above, third gear 20 may be integrally molded. In this case, the configuration of third gear 20 can be simplified, and third gear 20 can be easily manufactured.

The embodiments of the optical fiber cutter according to the present disclosure have been described above. However, the present invention is not limited to the embodiments described above. That is, it is easily recognized by those skilled in the art that various modifications and changes can be made within the scope of the gist described in the claims. For example, the shape, size, material, number, and arrangement of each part of the optical fiber cutter can be appropriately changed within the scope of the above description.

For example, in the above embodiment, integrally molded third gear 20 has been described. However, the third gear do not have to be integrally molded, and may be constituted by combining a plurality of components. For example, in the third gear, a tooth portion unit having tooth portion 22 and a claw unit which is a separate component from the tooth portion unit may be connected. In this case, hole 24 may be omitted. Further, the third gear do not have to include base 23 described above, and may be a third gear in which tooth portion 22 and claw portion 26 are directly coupled.

For example, in the above embodiment, the example in which third gear 20 is made of resin has been described. However, the material of the third gear is not limited to resin, and can be changed as appropriate. In the above embodiment, third gear 20 having claw unit 25 including two claw portions 26 and two arm portions 27, and two claw portions 26 has been described. However, a claw of the third gear do not have to be a claw unit, and the plurality of claw portions 26 may be formed independently of each other (for example, located apart from each other). The number of claw portions may be one or three or more, and is not particularly limited. Further, the shape of the claw portion is not limited to claw portion 26 described above, and can be appropriately changed within the scope of the above gist.

### REFERENCE SIGNS LIST

1 optical fiber cutter
2 substrate
3 cover
3b inside member
4 guide member
5 base member
5b cover
6 blade
7 moving member
10 fiber holding portion
11 interlocking member
11b rack
12 rotation shaft
13 first gear
14 roller
20 third gear
21 shaft
22 tooth portion
23 base
23b contact portion
24 hole
25 claw unit
26 claw portion
26b abutting surface
26c inclined surface
26d top portion
26f end portion
26g narrowed portion
27 arm portion
27b extension portion
27c bent portion
30 second gear
32 tooth portion
33 recessed portion
33b bottom surface
33c inner peripheral surface
34 protruding portion
34b second protruding surface
34c first protruding surface
35 through hole
A1 first direction
A2 second direction
D1 first rotation direction
D2 second rotation direction

## Claims

1. An optical fiber cutter having a cover and configured to cut an optical fiber by pivoting of the cover, the optical fiber cutter comprising:
a roller attached to a rotation shaft and configured to rotate about the rotation shaft while holding the optical fiber to be cut;
a first gear attached to the rotation shaft and configured to receive a driving force for rotating the rotation shaft;
a second gear configured to rotate by meshing with the first gear;
an interlocking member configured to interlock with pivoting of the cover and having a rack configured to transmit a driving force for rotating the second gear in accordance with the interlock; and
a third gear configured to rotate by meshing with the rack,
wherein the third gear rotates in a first rotation direction when the interlocking member moves in a first direction, and the third gear rotates in a second rotation direction opposite to the first rotation direction when the interlocking member moves in a second direction different from the first direction, and
wherein the second gear does not rotate when the third gear rotates in the first rotation direction, and the second gear rotates together with the third gear in the second rotation direction when the third gear rotates in the second rotation direction.

2. The optical fiber cutter according to claim 1,
wherein the second gear has a recessed portion into which a portion of the third gear enters,
wherein the recessed portion is defined by a bottom surface that the third gear faces and an inner peripheral surface,
wherein the second gear has a protruding portion protruding from the inner peripheral surface,
wherein the third gear has a claw portion configured to come into contact with the protruding portion in a state in which the claw portion is placed in the recessed portion of the second gear,
wherein the claw portion has an abutting surface extending along a radial direction of the third gear, a top portion located at an end of the abutting surface in the radial direction, and an inclined surface extending from the top portion obliquely to the abutting surface to form an acute angle between the abutting surface and the inclined surface,
wherein, when the third gear rotates in the first rotation direction, the inclined surface passes over the protruding portion, and the second gear does not rotate, and, when the third gear rotates in the second rotation direction, the abutting surface abuts the protruding portion, and the second gear rotates together with the third gear in the second rotation direction, and
wherein the claw portion has a narrowed portion extending from an end portion of the abutting surface opposite to the top portion, the narrowed portion becoming closer to the inclined surface as the narrowed portion becomes further away from the end portion.

3. The optical fiber cutter according to claim 2,
wherein the third gear has a tooth portion configured to rotate by meshing with the rack of the interlocking member, and
wherein the tooth portion is integrated with the claw portion.

4. The optical fiber cutter according to claim 3,
wherein the third gear has a base on which the tooth portion is formed, and
wherein the base is provided with a hole extending through the base in an axial direction of the third gear.

5. The optical fiber cutter according to any one of claim 1 to claim 4, comprising:
a fiber holding portion configured to hold the optical fiber, the fiber holding portion being configured to be movable upward and downward with respect to the roller.

6. The optical fiber cutter according to any one of claim 1 to claim 5,
wherein the first direction is a direction in which the interlocking member moves when the cover is closed, and the second direction is a direction in which the interlocking member moves when the cover is opened.

7. The optical fiber cutter according to any one of claim 1 to claim 6,
wherein the first direction is a direction from an upper location toward a lower location, and the second direction is a direction from a lower location toward an upper location.

8. The optical fiber cutter according to any one of claim 1 to claim 7,
wherein the first rotation direction is a direction in which a surface of the roller facing upward moves away from a blade of the optical fiber cutter, and the second rotation direction is a direction in which a surface of the roller facing upward moves toward the blade.

9. The optical fiber cutter according to claim 4,
wherein the base has a contact portion configured to come into contact with the second gear.

10. The optical fiber cutter according to claim 9,
wherein the contact portion has a flange shape with an enlarged diameter on a side of the base opposite to the tooth portion.

11. The optical fiber cutter according to any one of claim 4, claim 9, and claim 10,
wherein the claw portion and the hole are arranged side by side in an axial direction of the third gear.

12. The optical fiber cutter according to any one of claim 4 and claim 9 to claim 11,
wherein the claw portion is formed on a surface of the base opposite to the tooth portion.

13. The optical fiber cutter according to any one of claim 2 to claim 4 and claim 9 to claim 12,
wherein the third gear includes a claw unit including a plurality of the claw portions.

14. The optical fiber cutter according to claim 13,
wherein the claw unit has an arm portion extending from a location adjacent to a shaft of the third gear toward an outer periphery of the third gear, and the claw portion located at an end portion of the arm portion opposite to the shaft.

15. The optical fiber cutter according to claim 14,
wherein the claw unit is constituted by a pair of the arm portions and a pair of the claw portions.

16. The optical fiber cutter according to any one of claim 2 to claim 4 and claim 9 to claim 15,
wherein the claw portion has an abutting surface extending along a radial direction of the third gear, a top portion located at an end of the abutting surface in the radial direction, and an inclined surface extending from the top portion obliquely to the abutting surface to form an acute angle between the abutting surface and the inclined surface.

17. The optical fiber cutter according to any one of claim 1 to claim 16,
wherein the second gear has a recessed portion into which a portion of the third gear enters, the recessed portion being defined by a bottom surface that the third gear faces and an inner peripheral surface.

18. The optical fiber cutter according to any one of claim 2 to claim 4 and claim 9 to claim 16,
wherein the second gear has a protruding portion protruding from an inner peripheral surface of the second gear, and the claw portion of the third gear comes into contact with the protruding portion.

19. The optical fiber cutter according to claim 18,
wherein the protruding portion has a first protruding surface protruding along a radial direction of the second gear from the inner peripheral surface, and a second protruding surface extending from a protruding end of the first protruding surface to form a right angle between the first protruding surface and the second protruding surface when viewed along an axial direction of the second gear.

20. The optical fiber cutter according to any one of claim 1 to claim 19,
wherein the third gear is integrally molded.
